(19) Europäisches Patentamt
European Patent Office
Office européen des brevets

(11) Veröffentlichungsnummer: **0 256 988 B1**

(12) **EUROPÄISCHE PATENTSCHRIFT**

(45) Veröffentlichungstag der Patentschrift: **21.10.92**

(51) Int. Cl.[5]: **C08G 63/68**, C08G 59/42, C09D 167/02

(21) Anmeldenummer: **87810459.5**

(22) Anmeldetag: **13.08.87**

(54) **Gesättigte imidgruppenhaltige Polyester mit endständigen Carboxylgruppen.**

(30) Priorität: **19.08.86 CH 3321/86**

(43) Veröffentlichungstag der Anmeldung:
**24.02.88 Patentblatt 88/08**

(45) Bekanntmachung des Hinweises auf die Patenterteilung:
**21.10.92 Patentblatt 92/43**

(84) Benannte Vertragsstaaten:
**CH DE FR GB IT LI NL**

(56) Entgegenhaltungen:
**EP-A- 0 136 263**
**US-A- 4 446 301**

**Encyclopedia of Polymer Science and Engineering, Vol. 3, 1985 John Wiley & Sons, Seite 622, 632**

(73) Patentinhaber: **CIBA-GEIGY AG**
**Klybeckstrasse 141**
**CH-4002 Basel(CH)**

(72) Erfinder: **Gabutti, Claudio Alexander, Dr.**
**Vogesenstrasse 12**
**CH-4106 Therwil(CH)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft gesättigte Polyester mit endständigen Carboxylgruppen und mindestens einer imidgruppenhaltigen Seitenkette pro Molekül, die daraus erhaltenen härtbaren Stoffgemische mit Epoxidharzen und die Verwendung dieser Stoffgemische, insbesondere für die Herstellung von wärme- und wetterbeständigen Pulverlacken.

Imidgruppenhaltige Polyester sind bekannt.

So beschreiben die SU Patentschrift 318 227 und die DE Auslegeschrift 15 70 273 ungesättigte Polyester, hergestellt durch Polykondensation von Dicarbonsäuren und mehrwertigen Alkoholen in Anwesenheit eines Di- oder Polycarbonsäureimids als Modifizierungsmittel. Diese modifizierten ungesättigen Polymere werden, z.B. in Anwesenheit von Styrol, mit Butyl-periso-octoat und Cobalt-naphthenat gehärtet.

Die DE Offenlegungsschrift 28 56 050 beschreibt ein Verfahren zur Herstellung von ungesättigten imidgruppenhaltigen Polyestern, wobei als Ausgangsprodukt ungesättigte Oele eingesetzt werden. Die so erhaltenen Polyester werden zur Herstellung von Mischpolymerisaten mit olefinisch ungesättigten Monomeren, wie z.B. Vinylverbindungen, verwendet.

Die US Patentschrift 4,446,301 beschreibt imid- oder amidgruppenenthaltende Polyester, erhalten als Reaktionsprodukte eines Imids oder Amids, eines polyesterbildenden Polyols und einer polyesterbildenden mehrwertigen Carbonsäure oder deren Derivaten und gegebenenfalls eines Oels oder einer von einem Oel abgeleiteten ungesättigten Fettsäure. Die verwendeten Imide oder Amide ihrerseits werden aus spezifischen verzweigten primären Alkanolaminen und Polycarbonsäuren oder deren Derivaten hergestellt. Die Imid- oder Amidgruppen können Bestandteile der Polyesterhauptkette sein oder als Seitenketten vorliegen. Die Polyester eignen sich besonders für die Herstellung von lufttrocknenden Lacken mit hohem Feststoffgehalt sowie von bestimmten Tinten.

Aus der EP-A-0 136 263 ist ein Pulverlack bekannt, der lebensmittelechte flexible Beschichtungen ergibt und einen mindestens 2 Carboxylgruppen aufweisenden Polyester und ein aromatisches Epoxidharz enthält. Über den molekularen Aufbau des Polyester wird nichts gesagt.

Die vorliegende Erfindung betrifft gesättigte Polyester mit endständigen Carboxylgruppen und mindestens einer imidgruppenhaltigen Seitenkette der Formel I pro Molekül

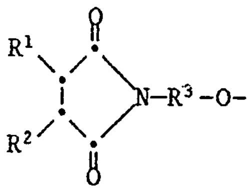

(I),

worin $R^1$ und $R^2$ unabhängig voneinander je Wasserstoff oder eine $C_1$-$C_4$-Alkylgruppe sind, oder zusammen mit den Kohlenstoffatomen an die sie gebunden sind einen Cyclopentan-, Cyclohexan- oder Benzolring darstellen, und $R^3$ ein geradkettiger $C_2$-$C_{12}$-Alkylen-, ein $C_6$-$C_{12}$-Arylenrest oder eine Gruppe der Formel II ist

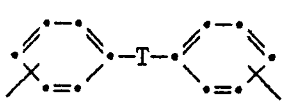

(II),

worin T für Methylen, Propyliden, NH, CO, $SO_2$, O oder S steht, wobei die Seitenketten der Formel I über Esterbindungen an drei-oder vierwertige, in der Polyesterhauptkette enthaltene aromatische Carbonsäuren gebunden sind, das mittlere Molekulargewicht, $\overline{M}_w$ des Polyesters zwischen 3000 und 20000 liegt, und der Polyester eine Säurezahl von 10 bis 200 aufweist.

Die erfindungsgemässen Polyester eignen sich beispielsweise für die Herstellung von härtbaren Stoffgemischen mit Epoxidharzen, welche insbesondere für die Erzeugung von wärme- und wetterbeständigen Pulverlacken geeignet sind.

Bedeuten $R^1$ und $R^2$ in der Seitenkette der Formel I eine $C_1$-$C_4$-Alkylgruppe, kann es sich dabei um Methyl, Ethyl, Propyl, iso-Propyl sowie n-, sec.- und tert.-Butyl handeln.

Vorzugsweise enthalten die erfindungsgemässen Polyester Seitenketten der Formel I, worin $R^1$ und $R^2$ unabhängig voneinander Wasserstoff oder Methyl sind, oder zusammen mit den Kohlenstoffatomen, an die

sie gebunden sind, einen Benzolring darstellen und insbesondere solche, worin $R^1$ und $R^2$ zusammen mit den Kohlenstoffatomen, an die sie gebunden sind, einen Cyclohexanring darstellen.

Bedeutet $R^3$ in der Seitenkette der Formel I einen geradkettigen $C_2$-$C_{12}$-Alkylenrest, so kann es sich dabei z.B. um Ethylen, 1,3-Propylen, 1,4-Butylen, 1,5-Pentylen oder 1,6-Hexylen handeln.

Wenn $R^3$ für einen $C_6$-$C_{12}$-Arylenrest steht, bedeutet es zum Beispiel Phenylen, Bisphenylen oder Naphthylen.

$R^3$ in der Seitenkette der Formel I bedeutet vorzugsweise einen geradkettigen $C_2$-$C_4$-Alkylenrest, wie Ethylen, 1,3-Propylen oder 1,4-Butylen, oder Phenylen, wie 1,2-, 1,3- und besonders 1,4-Phenylen. Besonders bevorzugt bedeutet $R^3$ Ethylen.

Die Polyesterhauptkette der erfindungsgemässen Polyester wird durch Umsetzung eines oder mehrerer polyesterbildender Polyole mit einer oder mehreren polyesterbildenden mehrwertigen Carbonsäuren oder deren Derivaten aufgebaut. Geeignete Derivate von polyesterbildenden mehrwertigen Carbonsäuren sind z.B. Anhydride, Säurehalogenide, wie z.B. Bromide oder insbesondere Chloride, oder Ester mit $C_1$-$C_4$-Alkoholen, insbesondere Methylester.

Bevorzugt werden erfindungsgemässe Polyester, worin in der Polyesterhauptkette 50 bis 80 Mol% der polyesterbildenden mehrwertigen Carbonsäurekomponente von einer Dicarbonsäure und die restlichen 50 bis 20 Mol% von einer Tri- oder Tetracarbonsäure abgeleitet sind. Geeignete Dicarbonsäuren sind Verbindungen der Formel III

$HOOC$-$R^4$-$COOH$ (III),

worin $R^4$ $C_6$-$C_{12}$-Arylen, $C_2$-$C_{12}$-geradkettiges oder verzweigtes Alkylen, $C_6$-$C_{12}$-Cycloalkylen oder eine Gruppe der Formel II ist.

Bevorzugte Reste $R^4$ sind $C_2$-$C_6$-Alkylen, vorzugsweise Tetramethylen, oder o-, m- oder p-Phenylen. Die in der Polyesterhauptkette enthaltendne Tri- oder Tetracarbonsäuren sind vorzugsweise Verbindungen der Formel IV

$R^5(COOH)_m$ (IV),

wobei m 3 oder 4 bedeutet und $R^5$ ein drei- oder vierwertiger $C_6$-$C_{12}$ aromatischer Rest oder ein der Formel II entsprechender drei- oder vierwertiger Rest ist.

Als geeignete mehrwertige polyesterbildende Carbonsäuren seien genannt: Adipinsäure, Azelainsäure, 1,2-, 1,3- und 1,4-Cyclohexandicarbonsäure, 1,2- und 1,3-Cyclopentandicarbonsäure, Glutarsäure, Phthalsäure, Isophthalsäure, Terephthalsäure, Biphenyl- oder Benzophenon-di-, -tri- oder -tetracarbonsäure, Naphthalintetracarbonsäure, 4,4′-Oxy-, 4,4′-Thio- oder 4,4′-Methylendiphthalsäure, Trimellitsäure und Pyromellitsäure.

Bevorzugte mehrwertige Carbonsäuren der Formel IV sind Trimellitsäure und Pyromellitsäure.

Die erfindungsgemässen Polyester enthalten in der Polyesterhauptkette vorzugsweise mindestens 80 Mol% der polyesterbildenden Polyolkomponente eines Diols und die restlichen 0 bis 20 Mol% eines Tri- oder Tetraols.

Das Polyol hat vorzugsweise die Formel V

$R^6(OH)_n$ (V),

worin n 2, 3 oder 4 bedeutet und $R^6$ für einen zwei- bis vierwertigen $C_6$-$C_{12}$ cycloaliphatischen oder $C_6$-$C_{12}$ aromatischen Rest, einen der Formel II entsprechenden zwei- bis vierwertigen Rest oder insbesondere für einen zwei- bis vierwertigen geradkettigen oder verzweigten $C_2$-$C_{12}$ aliphatischen Rest steht.

Bevorzugte Polyole der Formel V sind zwei- bis vierwertige aliphatische Polyole, insbesondere Ethylenglykol, Propylenglykol, Butylenglykol, 1,5-Pentandiol, 1,6-Hexandiol, Neopentylglykol, Glycerin, 1,1,1-Tris-(hydroxymethyl)propan und 2,2-Bis(hydroxymethyl)-1,3-propandiol.

Am meisten bevorzugte Polyole der Formel V sind Neopentylglykol und 1,6-Hexandiol.

Wie bereits erwähnt, sind in den erfindungsgemässen Polyestern die Seitenketten der Formel I über Esterbindungen an drei- oder vierwertige, in der Polyesterhauptkette enthaltene aromatische Carbonsäuren gebunden. Der Polyester weist daher die folgende Teilstruktur auf

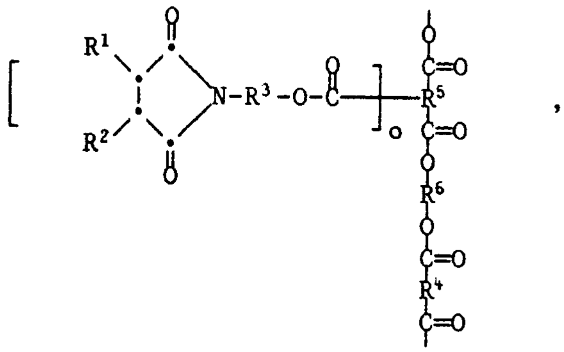

wobei o die Zahl 1 oder 2 ist und die Reste $R^1$, $R^2$, $R^3$, $R^4$ und $R^5$ die oben angegebene Bedeutung haben. Der Einfachheit halber wurden in der Darstellung der Teilstruktur der Polyesterhauptkette nur zweiwertige Polyol- bzw. Polycarbonsäurereste $R^6$ und $R^4$ verwendet.

Die erfindungsgemässen Polyester können nach bekannten Polyestersynthesemethoden hergestellt werden. Die Umsetzung wird geeigneterweise bei erhöhter Temperatur, z.B. zwischen 120 und 250 °C, vorzugsweise zwischen 160 und 230 °C und in einer inerten Atmosphäre, wie Stickstoff oder Argon, durchgeführt. Die Reaktion kann mit oder ohne Katalysator durchgeführt werden. Wenn ein Katalysator verwendet wird, können für die Herstellung von Polyestern übliche Katalysatoren, wie z.B. katalytische Mengen von Säuren oder von Uebergansmetallverbindungen, beispielsweise anorganischer oder organischer Verbindungen des Antimons, Titans oder Zinns, eingesetzt werden. Bevorzugte Katalysatoren sind z.B. Phosphorsäure, p-Toluolsulfonsäure, Zinnoxid, organische Titan- oder Zinnverbindungen, z.B. Alkylzinncarboxylate, wie Dibutylzinndilaurat, und Titan-Carbonsäuresalze. Im allgemeinen wird der Katalysator in einer Menge von 0,01 bis 1 Gew.%, bezogen auf die Gesamtmenge der Edukte, eingesetzt.

Geeigneterweise wird die Reaktion so durchgeführt, dass zuerst das Alkanolamin $H_2N\text{-}R^3\text{-}OH$ mit einer imidbildenden Dicarbonsäure oder deren Derivat zu einem Hydroxyimid der Formel VI umgesetzt wird

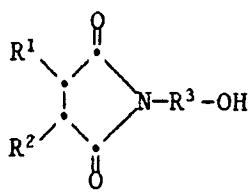

(VI),

und die Verbindung der Formel VI danach mit einer drei- oder vierwertigen Carbonsäure der Formel IV

$R^5(COOH)_m$ (IV)

oder deren Derivat zu einer Verbindung der Formel VII verestert wird

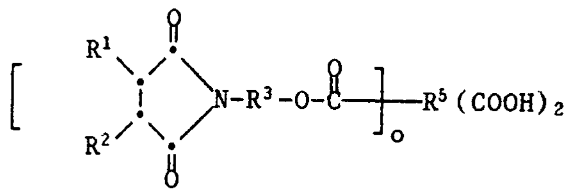

(VII),

wobei die Reste $R^1$, $R^2$, $R^3$ und $R^5$, sowie die Indizes m und o die vorher angegebene Bedeutung haben. Die Verbindungen der Formel VI bzw. VII können jeweils isoliert werden, bevorzugt wird aber die gesamte Umsetzung in einem Eintopfverfahren durchgeführt, indem die entsprechenden Edukte der Reihe nach dem Reaktionsgemisch beigegeben und miteinander erhitzt werden. Die Menge des Alkanolamins $H_2NR^3OH$ beträgt vorzugsweise 2 bis 15, insbesondere 3 bis 10, Gew.%, bezogen auf das Gesamtgewicht aller bei der Synthese der erfindungsgemässen Polyester eingesetzten Edukte. Die Umsetzung der Dicarbonsäure der Formel VII mit weiteren mehrwertigen polyesterbildenden Carbonsäuren oder deren Derivaten und mit

Polyolen, bei der die Polyesterhauptkette gebildet wird, erfolgt nach den vorerwähnten bekannten Polyestersynthesemethoden.

Der Reaktionsverlauf kann durch die Bestimmung der Menge des bei der Umsetzung entstehenden Destillats, z.B. Wassers, oder durch Entnahme von Proben des Reaktionsgemisches in bestimmten Zeitintervallen und Bestimmung der Polymereigenschaften, wie z.B. der Säurezahl, des Molekulargewichts oder der Viskosität, verfolgt werden.

Die Reaktion kann ohne Lösungsmittel in der Schmelze oder in Lösung in einem geeigneten inerten Lösungsmittel, wie z.B. Toluol oder Xylol, durchgeführt werden.

Der erfindungsgemässe Polyester hat ein mittleres Molekulargewicht, $\overline{M}_w$, zwischen 3000 und 20000, vorzugsweise zwischen 3500 und 10000 und eine Säurezahl von 10 bis 200, vorzugsweise von 30 bis 100. Das Molekulargewicht kann z.B. mit Gelpermeationschromatographie in einem geeigneten Lösungsmittel, wie z.B. Tetrahydrofuran, bestimmt werden.

Die Menge der einzelnen Komponenten bei der Synthese des Polyesters wird vorzugsweise so gewählt, dass pro Molekül des Polyesters mindestens zwei, insbesondere fünf bis zehn imidgruppenhaltige Seitenketten der Formel I vorliegen.

Die erfindungsgemässen Polyester sind vorzugsweise bei Zimmertemperatur fest und haben eine Erweichungstemperatur von etwa 80 bis 150 °C. Um Polyester mit endständigen Carboxylgruppen zu erhalten, können z.B. Polymere mit endständigen Hydroxylgruppen mit einer Tri- oder Tetracarbonsäure oder deren Anhydrid umgesetzt werden.

Die erfindungsgemässen Polyester eignen sich z.B. als Härter für Epoxidharze.

Gegenstand der Erfindung sind daher auch Pulverlacke in Form eines härtbaren Stoffgemisches enthaltend

a) einen erfindungsgemässen Polyester und

b) ein Epoxidharz,

wobei die Mengen der Komponenten (a) und (b) so gewählt werden, dass pro Carboxylgruppe des Polyesters 0,5 bis 2, vorzugsweise 0,8 bis 1,5, Epoxidgruppen des Epoxidharzes kommen.

Die erfindungsgemässen Pulverlacke ergeben wärme- und wetterbeständiger Beschichtungen.

Die Erfindung betrifft auch die Verwendung der erfindungsgemässen härtbaren Stoffgemische für die Herstellung von Pulverlacken.

Als Komponenten (a) und (b) der erfindungsgemässen Stoffgemische können jeweils einheitliche Verbindungen oder Gemische verschiedener Verbindungen verwendet werden.

Als Komponente (b) können die üblichen, für Pulverbeschichtungen geeigneten Epoxidharze verwendet werden. Solche Verbindungen sind beispielsweise in der DE-OS 28 38 841 beschrieben.

Die verwendeten Harze haben vorzugsweise einen Epoxidgehalt von 0,5 bis 12 Aequivalenten pro kg. Die bevorzugten Epoxidharze sind bei Zimmertemperatur fest und können, falls erforderlich, durch Umsetzung mit z.B. einem zweiwertigen Phenol vorverlängert werden.

Besonders bevorzugt sind Epoxidharze, die im Durchschnitt mehr als eine Epoxidgruppe im Molekül enthalten, und Polyglycidylderivate von Aromaten oder Heteroaromaten sind.

Besonders bevorzugte Harze sind gegebenenfalls vorverlängerte Polyglycidylether von 2,2-Bis(4′-hydroxyphenyl)propan (Bisphenol A), 2,2-Bis(3′ ,5′-dibromo-4′-hydroxyphenyl)propan (Tetrabrombisphenol A), von Bis(4-hydroxyphenyl)methan (Bisphenol F) und von Novolaken, Polyglycidylderivate von 4,4′-Diaminodiphenylmethan, von 4,4′-Diaminodiphenylsulfon sowie insbesondere von 2,4,6-Trihydroxy-1,3,5-triazin (Cyanursäure), wie z.B. Triglycidylisocyanurat. Bevorzugte Harze sind auch Polyglycidylester, wie z.B. Terephthalsäure-Diglycidylester oder Trimesinsäure ( = Benzol-1,3,5-tricarbonsäure)-Triglycidylester.

Das Epoxidharz (b) und der Polyester (a) werden vorzugsweise so gewählt, dass die Summe der Epoxidäquivalente und der Carboxyläquivalente zwischen 0,8 und 2,5 pro kg des Bindemittels (a) + (b) beträgt.

Gewünschtenfalls können den Pulverlacken noch weitere in der Lackindustrie übliche Zusätze, wie beispielsweise Füllstoffe, Lichtschutzmittel, Mattierungsmittel, Farbstoffe, Mahlhilfen, Beschleuniger, Weichmacher und insbesondere Entgasungsmittel, Verlaufsmittel und/oder Pigmente beigegeben werden.

Verlaufsmittel sind z.B. Polyvinylacetate, wie Polyvinylbutyral ("Movital" B 30 H® der HOECHST), Polyethylenglykol, Polyvinylpyrrolidon, Glycerin, Acryl-Mischpolymerisate, wie "Modaflow"® oder "Acrylon" MFP® der MONSANTO bzw. der PROTEX.

Als Entgasungsmittel wird vorzugsweise Benzoin eingesetzt.

Die die erfindungsgemässen Stoffgemische enthaltenden Pulverlacke können durch einfaches Mischen der Bestandteile, z.B. in einer Kugelmühle, hergestellt werden. Eine andere Möglichkeit der Herstellung besteht darin, dass man die Bestandteile zusammen schmilzt, vorzugsweise in einem Extruder, wie z.B. in einem Buss-Kokneter, und dann die abgekühlte Masse zerkleinert. Die Mischungen weisen vorzugsweise

eine Partikelgrösse im Bereich von 0,015 bis 500 µm, und insbesondere 10-75 µm, auf.

Der Pulverlack wird auf den zu beschichtenden Gegenstand, z.B. mit einer elektrostatischen Pulverspritzpistole, appliziert und zweckmässig auf mindestens 120 °C, vorzugsweise auf 150 bis 250 °C, erhitzt, um das Harz auszuhärten.

Die anmeldungsgemäss erhaltenen gehärteten Ueberzüge zeichnen sich durch eine ausgezeichnete Wärme- und Wetterbeständigkeit aus. Insbesondere tritt bei den mit den erfindungsgemässen Polyestern hergestellten gehärteten Pulverlacküberzügen bei Wärmealterung keine thermische Kreidung auf.

In den folgenden Beispielen wird die Herstellung einiger erfindungsgemässer Polyester, der daraus erhältlichen Pulverlacke sowie deren Anwendung als wärme- und wetterbeständige Ueberzüge beschrieben.

1. Herstellung der Polyester

Beispiel 1.1

168 Gewichtsteile Hexahydrophthalsäureanhydrid und 67 Gewichtsteile Monoethanolamin werden unter Stickstoff bei einer Temperatur von 200 °C zum Imid umgesetzt, dann mit 211 Gewichtsteilen Trimellitsäureanhydrid versetzt und während 30 Minuten bei 200 °C gehalten. Zu dieser Schmelze werden 468 Gewichtsteile Neopentylglykol und 524 Gewichtsteile Isophthalsäure gegeben und bis max. 230 °C Kochtemperatur zu einer Säurezahl <50 verestert, dann mit 95,75 Gewichsteilen Trimellitsäureanhydrid versetzt und wiederum zu einer Säurezahl von 52 verestert. Erweichungspunkt des Produktes nach DIN 51920 ist 114,3 °C und das mittlere Molekulargewicht ist $\overline{M}_n$ = 1166, $\overline{M}_w$ = 4186 (Gelpermeationschromatographie in THF auf Styragel; Eichung mit Polystyrol).

Beispiel 1.2

Analog Beispiel 1 werden 168 Gewichtsteile Hexahydrophthalsäureanhydrid mit 67 Gewichtsteilen Monoethanolamin umgesetzt und dann mit 211 Gewichtsteilen Trimellitsäureanhydrid zur Reaktion gebracht. Zu dieser Schmelze werden 468 Gewichtsteile Neopentylglykol, 349 Gewichtsteile Isophthalsäure und 153 Gewichtsteile Adipinsäure gegeben und bis max 230 °C Kochtemperatur zu einer Säurezahl <50 verestert, dann mit 96 Gewichtsteilen Trimellitsäureanhydrid versetzt und zu einem Produkt mit einer Säurezahl von 57 verestert. Erweichungspunkt des Produktes nach DIN 51920 ist 95,6 °C und das mittlere Molekulargewicht ist $\overline{M}_n$ = 1145, $\overline{M}_w$ = 4161 (GPC in THF auf Styragel; Eichung mit Polystyrol).

Beispiel 1.3

Analog Beispiel 1 werden 168 Gewichtsteile Hexahydrophthalsäureanhydrid mit 67 Gewichtsteilen Monoethanolamin umgesetzt und dann mit 211 Gewichtsteilen Trimellitsäurenahydrid zur Reaktion gebracht. Zu dieser Schmelze werden 313 Gewichtsteile Neopentylglykol, 177 Gewichtsteile 1,6-Hexandiol und 524 Gewichtsteile Isophthalsäure gegeben sowie dann 77 Gewichtsteile Trimellitsäureanhydrid. Das Produkt hat eine Säurezahl von 52, einen Erweichungspunkt nach DIN 51920 von 107,9 °C und ein mittleres Molekulargewicht $\overline{M}_n$ = 1329, $\overline{M}_w$ = 6430 (GPC in THF auf Styragel; Eichung mit Polystyrol).

Beispiel 1.4

305 Gewichtsteile Hexahydrophthalsäureanhydrid und 122 Gewichtsteile Monoethanolamin werden unter Stickstoff zum Imid umgesetzt, dann mit 218 Gewichtsteilen Pyromellitsäuredianhydrid versetzt und während 2 Std. bei 200 °C gehalten. Zu dieser Schmelze werden 502 Gewichtsteile 1,6-Hexandiol und 583 Gewichtsteile Terephthalsäuredimethylester gegeben und bis max. 233 °C Kochtemperatur zu einer Säurezahl <50 verestert, dann mit 48 Gewichtsteilen Trimellitsäureanhydrid versetzt und zu einem Produkt mit einer Säurezahl von 42 verestert.

2. Epoxidharz

In allen Andwendungsbeispielen wird als Epoxidverbindung Triglycidylisocyanurat eingesetzt, das ein Epoxid-Aequivalentgewicht von ≦ 108, eine Epoxidzahl von ≧9,3 Aeq/kg und einen Schmelzbereich von 86 bis 97 °C aufweist.

3. Pulverlacke

Zur Herstellung der Pulverlacke werden die gemahlenen Produkte, Polyester, Epoxidharz und Verlaufsmittel mit einem Weisspigment ($TiO_2$) im Rhönrad innig vermischt und anschliessend im Extruder bei 40 bis 90 ° C homogenisiert. Nach dem Abkühlen wird das Extrudat gebrochen und in einer Stiftmühle auf eine Korngrösse von <100µm gemahlen. Das so hergestellte Pulver wird mit einer elektrostatischen Pulverspritzpistole bei 60 kV auf entfettete Stahlbleche appliziert und in einem Umlufttrockenschrank eingebrannt.

Beispiel 3.1

Nach dem beschriebenen Verfahren wird der Pulverlack mit folgender Rezeptur hergestellt und appliziert.
900 Gewichtsteile Polyester gem. Bsp. 1.1
100 Gewichtsteile Epoxidharz gem. 2
10 Gewichtsteile Modaflow-Powder II® [1]
500 Gewichtsteile Weisspigment ($TiO_2$)
2 Gewichtsteile Benzoin

| | |
|---|---|
| Einbrennbedingungen: | 30 Min. 200 ° C |
| Gelierzeit (B-Zeit) bei 180 ° C: | 60 s |
| Filmdicke (µm): | 60 |
| Tiefung nach Erichsen (mm): (DIN 53156) | 3,6 |
| Acetontest* (Note): | 2 |

* Acetontest: Ein in Aceton getauchter Wattebausch wird für 1 Min auf die zu prüfende Musterplatte gelegt. Bewertung: Note 0 = unveränderte Oberfläche; 1 = Erweichung kaum merklich, mit Fingernagel nicht kratzbar; 2 = mit Fingernagel kratzbar, jedoch nicht bis auf Grund; 3 = kratzbar bis auf Grund; 4 = Film abziehbar oder mit Watte abzureiben; 5 = praktisch vollständig augelöst.

| Kreidung nach Helmen (DIN 53223) | | | | |
|---|---|---|---|---|
| | 120 ° C/24 h | 120 ° C/200 h | 120 ° C/1 Monat | 120 ° C/5 Monate |
| rel. Kreidung % | 0 | 0 | 0 | 0 |

Wetterbeständigkeit:

Prüfung durch Schnellbewitterung auf Aluminiumblech mit dem Atlas Weather-O-Meter, Modell DCM (Kohlebogenlicht). Der Tageszyklus bei der Prüfung war: 20 h Belichtung gemäss Zyklusscheibe Nr. 10 (17 Min. Belichtung, 3 Min. Belichtung und Beregnung), 1 h Lagerung in Leitungswasser, 1 h Kühlung auf -20 ° C (Frost), 2 h Lagerung bei Raumtemperatur.

| | Ausgangswert | 1000 h | 2000 h |
|---|---|---|---|
| Glanz∢60° (%)(DIN 67550) | 85 | 90 | 86 |
| Gelbwert (DIN 6167) | -2 | -2 | 1,8 |

Beispiel 3.2

892 Gewichtsteile Polyester gem. Bsp. 1.2
108 Gewichtsteile Epoxidharz gem. 2
10 Gewichtsteile Modaflow-Powder II®
500 Gewichtsteile Weisspigment ($TiO_2$)
2 Gewichtsteile Benzoin

[1] Verlaufsmittel der Firma Monsanto auf der Basis von Poly(2-hydroxyethyl)acrylat adsorbiert auf Silkagel.

| | |
|---|---|
| Einbrennbedingungen: | 15 Min. 200 °C |
| (B-Zeit) bei 180 °C: | 45 s |
| Filmdicke (μm): | 60 |
| Tiefung nach Erichsen (mm) (DIN 53156): | 9,3 |
| Acetontest* (Note): | 3 |

Kreidung nach Helmen (DIN 53223)

| | 120°C/24 h | 120°C/200 h | 120°C/1 Monat | 120°C/3 Monate |
|---|---|---|---|---|
| rel. Kreidung % | 0 | 0 | 0 | 0 |

## Patentansprüche

1. Gesättigte Polyester mit endständigen Carboxylgruppen und mindestens einer imidgruppenhaltigen Seitenkette der Formel I pro Molekül

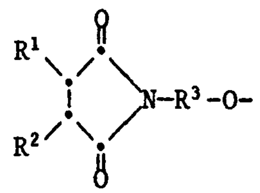

(I),

worin $R^1$ und $R^2$ unabhängig voneinander je Wasserstoff oder eine $C_1$-$C_4$-Alkylgruppe sind, oder zusammen mit den Kohlenstoffatomen, an die sie gebunden sind, einen Cyclopentan-, Cyclohexan- oder Benzolring darstellen, und $R^3$ ein geradkettiger $C_2$-$C_{12}$-Alkylen-, ein $C_6$-$C_{12}$-Arylenrest oder eine Gruppe der Formel II ist

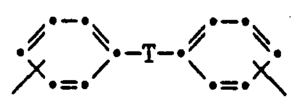

(II),

worin T für Methylen, Propyliden, NH, CO, $SO_2$, O oder S steht, wobei die Seitenketten der Formel I über Esterbindungen an drei- oder vierwertige, in der Polyesterhauptkette enthaltene aromatische Carbonsäuren gebunden sind, das mittlere Molekulargewicht, $\overline{M}_w$ des Polyesters zwischen 3000 und 20000 liegt, und der Polyester eine Säurezahl von 10 bis 200 aufweist.

2. Polyester nach Anspruch 1, worin $R^1$ und $R^2$ zusammen mit den Kohlenstoffatomen, an die sie gebunden sind, einen Cyclohexanring darstellen.

3. Polyester nach Anspruch 1, worin $R^3$ ein geradkettiger $C_2$-$C_4$-Alkylenrest oder Phenylen ist.

4. Polyester nach Anspruch 1, worin in der Polyesterhauptkette 50 bis 80 Mol% der polyesterbildenden mehrwertigen Carbonsäurekomponente von einer Dicarbonsäure und die restlichen 50 bis 20 Mol% von einer Tri- oder Tetracarbonsäure abgeleitet sind.

5. Polyester nach Anspruch 4, worin die Dicarbonsäure die Formel III hat

$HOOC-R^4-COOH$ (III),

wobei $R^4$ $C_6$-$C_{12}$-Arylen, $C_2$-$C_{12}$-geradkettiges oder verzweigtes Alkylen, $C_6$-$C_{12}$-Cycloalkylen oder eine Gruppe der Formel II, nach Anspruch 1 ist.

**6.** Polyester nach Anspruch 4, worin die Tri- oder die Tetracarbonsäure die Formel IV hat

$R^5 (COOH)_m$ (IV),

wobei m 3 oder 4 bedeutet und $R^5$ ein drei- oder vierwertiger $C_6$-$C_{12}$ aromatischer Rest oder ein der Formel II nach Anspruch 1 entsprechender drei- oder vierwertiger Rest ist.

**7.** Polyester nach Anspruch 1, der 2 bis 20, vorzugsweise 5 bis 10 Seitenketten der Formel I pro Molekül aufweist.

**8.** Polyester nach Anspruch 1, der ein mittleres Molekulargewicht, $\overline{M}_w$ von 3500 bis 10000 und eine Säurezahl von 30 bis 100 aufweist.

**9.** Pulverlack in Form eines härtbaren Stoffgemisches enthaltend
a) einen Polyester nach Anspruch 1 und
b) ein Epoxidharz,
wobei die Mengen der Komponenten (a) und (b) so gewählt werden, dass pro Carboxylgruppe des Polyesters 0,5 bis 2 Epoxidgruppen des Epoxidharzes vorkommen.

## Claims

**1.** A saturated polyester containing terminal carboxyl groups and, per molecule, at least one side chain, containing imide groups, of the formula I

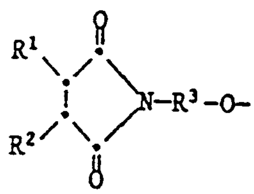

(I),

in which $R^1$ and $R^2$ independently of one another are each hydrogen or a $C_1$-$C_4$alkyl group or, together with the carbon atoms to which they are attached, are a cyclopentane, cyclohexane or benzene ring, and $R^3$ is a straight-chain $C_2$-$C_{12}$alkylene radical, a $C_6$-$C_{12}$arylene radical or a group of the formula II

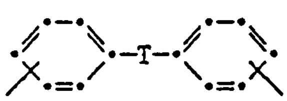

(II),

in which T is methylene, propylidene, NH, CO, $SO_2$, O or S, the side chains of the formula I being attached via ester linkages to tribasic or tetrabasic aromatic carboxylic acids present in the polyester main chain, the average molecular weight $\overline{M}_w$ of the polyester being between 3,000 and 20,000 and the polyester having an acid number from 10 to 200.

**2.** A polyester according to claim 1, wherein $R^1$ and $R^2$, together with the carbon atoms to which they are attached, are a cyclohexane ring.

**3.** A polyester according to claim 1, wherein $R^3$ is a straight-chain $C_2$-$C_4$alkylene radical or is phenylene.

**4.** A polyester according to claim 1, wherein 50 to 80 mol % of the polyester-forming, polybasic carboxylic acid component in the polyester main chain are derived from a dicarboxylic acid and the remaining 50 to 20 mol % are derived from a tricarboxylic or tetracarboxylic acid.

**5.** A polyester according to claim 4, wherein the dicarboxylic acid has the formula III

$HOOC$-$R^4$-$COOH$ (III),

in which $R^4$ is $C_6$-$C_{12}$arylene, straight-chain or branched $C_2$-$C_{12}$alkylene, $C_6$-$C_{12}$cycloalkylene or a group of the formula II according to claim 1.

**6.** A polyester according to claim 4, wherein the tricarboxylic acid or the tetracarboxylic acid has the formula IV

$R^5(COOH)_m$ (IV),

in which m is 3 or 4 and $R^5$ is a trivalent or tetravalent $C_6$-$C_{12}$ aromatic radical or a trivalent or tetravalent radical of the formula II according to claim 1.

**7.** A polyester according to claim 1, which contains 2 to 20, preferably 5 to 10, side chains of the formula I per molecule.

**8.** A polyester according to claim 1, which has an average molecular weight $\overline{M}_w$ of 3,500 to 10,000 and an acid number of 30 to 100.

**9.** A powder paint in the form of a curable composition containing
a) a polyester according to claim 1 and
b) an epoxide resin,
the amounts of the components (a) and (b) being so chosen that there are 0.5 to 2 epoxide groups of the epoxide resin per carboxyl group of the polyester.

## Revendications

**1.** Polyesters saturés portant des radicaux carboxy terminaux et contenant, par molécule, au moins une chaîne latérale qui renferme un radical imide et répond à la formule I :

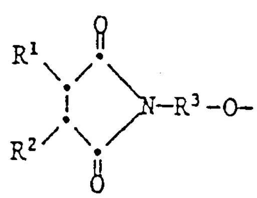

(I)

dans laquelle
$R^1$ et $R^2$ représentent chacun, indépendamment l'un de l'autre, l'hydrogène ou un alkyle en $C_1$-$C_4$, ou forment ensemble, et avec les atomes de carbone auxquels ils sont liés, un cycle de cyclopentane, de cyclohexane ou de benzène, et
$R^3$ représente un alkylène linéaire en $C_2$-$C_{12}$, un arylène en $C_6$-$C_{12}$ ou un radical répondant à la formule II

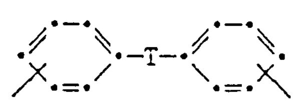

(II)

dans laquelle T représente un méthylène, un propylidène, NH, CO, $SO_2$, O ou S,
les chaînes latérales de formule I étant unies par des liaisons esters à des acides tricarboxyliques ou tétracarboxyliques aromatiques contenus dans la chaîne principale du polyester, la masse moléculaire moyenne $\overline{M}_p$ du polyester étant comprise entre 3000 et 20000, et le polyester ayant un indice d'acide de 10 à 200.

**2.** Polyesters selon la revendication 1 dans lesquels $R^1$ et $R^2$ forment ensemble, et avec les atomes de carbone auxquels ils sont liés, un cycle de cyclohexane.

**3.** Polyesters selon la revendication 1 dans lesquels $R^3$ représente un alkylène linéaire en $C_2$-$C_4$ ou un phénylène.

**4.** Polyesters selon la revendication 1 caractérisés en ce que, dans la chaîne principale polyester, de 50 à 80% en moles de la composante acide polycarboxylique générateur de polyesters dérivent d'un acide dicarboxylique et les 50 à 20% en moles restants dérivent d'un acide tricarboxylique ou tétracarboxylique.

**5.** Polyesters selon la revendication 4 dans lesquels l'acide dicarboxylique répond à la formule III :

$HOOC-R^4-COOH$ (III)

dans laquelle $R^4$ représente un arylène en $C_6$-$C_{12}$, un alkylène en $C_2$-$C_{12}$ linéaire ou ramifié, un cycloalkylène en $C_6$-$C_{12}$ ou un radical de formule II selon la revendication 1.

**6.** Polyesters selon la revendication 4 dans lesquels l'acide tricarboxylique ou tétracarboxyliques répond à la formule IV :

$R^5(COOH)_m$ (IV)

dans laquelle m est égal à 3 ou à 4 et $R^5$ représente un radical aromatique en $C_6$-$C_{12}$ trivalent ou quadrivalent ou un radical trivalent ou quadrivalent correspondant à la formule II selon la revendication 1.

**7.** Polyesters selon la revendication 1 qui contiennent, par molécule, de 2 à 20 chaînes latérales de formule I, de préférence de 5 à 10.

**8.** Polyesters selon la revendication 1 qui ont une masse moléculaire moyenne $\overline{M}_p$ comprise entre 3500 et 10000 et un indice d'acide de 30 à 100.

**9.** Peinture poudre sous la forme d'un mélange durcissable qui contient :
a) un polyester selon la revendication 1 et
b) une résine époxydique,
les quantités des composantes (a) et (b) étant choisies de telle façon qu'il y ait, par radical carboxy du polyester, de 0,5 à 2 radicaux époxy de la résine époxydique.